# EUROPEAN PATENT APPLICATION

(11) **EP 4 184 620 A1**
(43) Date of publication of application: **24.05.2023**
(21) Application number: 21315244.0
(22) Date of filing: 17.11.2021
(51) Int. Cl.: H01M 4/90, H01M 4/92, H01M 4/88, B01J 37/08

(54) **METHOD FOR THE SYNTHESIS OF A METAL CATALYST SURROUNDED WITH A CARBON MATRIX**

(71) Applicant: Institut Polytechnique de Grenoble, 38000 Grenoble (FR); Université Grenoble Alpes, 38400 Saint-Martin-d'Hères (FR); Centre national de la recherche scientifique, 75016 Paris (FR); Université Savoie Mont Blanc, 73000 Chambéry (FR)
(72) Inventor: Chatenet, Marian, 38240 MEYLAN (FR); Doan, Huong, 38000 GRENOBLE (FR); Sgarbi, Ricardo, 38000 GRENOBLE (FR)
(74) Representative: Brizio Delaporte, Allison

(57) **Abstract**

This invention concerns a method for a synthesis of a metal catalyst (2), comprising: providing at least one metal complex (10) comprising a metal ion and a non-chelating complexing agent comprising carbon, the complex (10) having a decomposition temperature, and performing a pyrolysis of the complex (10) at a temperature greater than or equal to a decomposition temperature of the complex (10), whereby inducing a formation of nanoparticles (20) surrounded by a carbon matrix (21) to form the catalyst (2). Thanks to the carbon matrix, the catalysts (2) provided herein can be corrosion resistant, self-healing, more cost-effective, and can have higher catalytic activity. The synthesis of the catalyst and its properties can furthermore be improved compared to catalysts formed from a complex comprising a chelating.

## Description

### DOMAIN OF THE INVENTION

The present invention relates in general to the synthesis of a metal catalyst. Its advantageous application is the catalysis of redox reactions, for example hydrogen evolution reaction (HER), hydrogen oxidation reaction (HOR), complex fuel oxidation, alcohol oxidation or oxygen reduction.

### TECHNOLOGICAL BACKGROUND

Metal catalysts are commonly used in many chemical reactions. In particular, metal particles are used for heterogeneous catalysis of numerous redox reactions.

For instance, the production of hydrogen via water electrolysis involves hydrogen evolution reactions (HER), and its use in fuel cells involves hydrogen oxidation reaction (HOR), these reactions being possible in acidic and in alkaline media. Hydrogen oxidation reaction (HOR) in alkaline media is still challenging and poorly understood. From an economic perspective, Alkaline Fuel Cell (AFC) systems need a non-Pt catalyst that is durable to achieve the economic standard, and so this system can be less expensive than classic proton-exchange-membrane fuel cell (PEMFC) catalyst, usually based on Pt. New catalysts for alkaline HOR have experienced growing interest. Recently, bi-functional Pd-MₓO_{y}, Ni-MₓO_{y} or Pd-Ni catalysts were proven to be more active and stable for alkaline HOR than their monometallic counterparts, and sometimes more than Pt catalysts.

However, metal catalysts are subject to pollution or passivation issues that reduce their catalytic activity. In particular, both AFC systems and PEMFC would benefit from a catalyst that resists poison contaminant gas, such as CO, or the COₓ-like species that may be produced as a result of carbon corrosion, which is often promoted by the catalysts particles.

It is known from the document WO 2021/127658 A1 a method of making a transition metal catalyst comprising providing a mixture of carbon black particles and a transition metal complex containing a chelating agent, and heating the mixture to form metal/metal oxide nanoparticles covered with a carbon matrix. The carbon matrix improves the stability of the catalyst, hence prolonging its sustainability in use. In practice, the properties of the resulting catalysts and the versatility of this method remain however limited.

It is therefore an object of the present invention to propose a solution for improving chemical catalysts based on at least one metal, surrounded by a carbon layer. In a nonlimiting way, an objective is to propose a solution for improving the synthesis method and/or the properties of the catalysts.

Other objects, features and advantages of the present invention will become apparent from the following description and accompanying drawings. It is understood that other advantages may be incorporated.

### SUMMARY

To achieve this objective, according to one embodiment, the present invention concerns a method for the synthesis of a metal catalyst, comprising:
- providing at least one metal complex comprising a metal ion and a non-chelating complexing agent comprising carbon, the complex having a decomposition temperature,
- pyrolysis of the complex at a temperature greater than or equal to the decomposition temperature of the complex, whereby inducing a formation of nanoparticles surrounded by a carbon matrix to form the catalyst.

The catalysts provided herein can be corrosion resistant, self-healing, more costeffective, and can have higher' catalytic activity. For example, these catalysts enable the production of hydrogen or hydrogen oxidation using low-temperature membrane technology operating at alkaline pH, or even corresponding membraneless technologies.

With a non-chelating complexing agent, the interaction force between the metal ion and the complexing agent is weaker as compared to a complex with a chelating agent. The decomposition temperature of the complex is thus decreased. The pyrolysis can therefore be performed at a wider range of temperatures to obtain the catalyst. This wider range offers several advantages. The risk of combustion of the complex, and when applicable of the substrate, is reduced, and preferably prevented. Nanoparticles size and properties of the carbon matrix can be better tuned. More particularly, the shape, the thickness and the amorphous/graphitic nature of the carbon matrix can be tuned. This further offers a wider precursor choice for the complexing agent and especially for the metal ion, allowing the use of less expensive precursors to enable low-cost synthesis. The synthesis of the catalyst and its properties is therefore improved.

A further aspect of the present invention concerns a metal catalyst synthesized by the method of the first embodiment. Referring to the effects and advantages described above with reference to the method, the catalysts are improved compared to existing solutions. More particularly, their properties can be better tuned and their cost can be reduced.

### BRIEF DESCRIPTION OF THE FIGURES

The aims, objects, features and advantages' of the invention will become clearer from the detailed description of an embodiment of the invention, which is illustrated by the following accompanying drawings.
Figure 1 illustrates the synthesis method according to two embodiments of the invention.
Figure 2 is a Transmission Electron Microscopy (TEM) image of the carbon-coated Ni catalyst obtained according to an embodiment wherein the complex is not supported by a substrate.
Figures 3A to 3C are TEM images of the carbon-coated Pd-Ni/C catalyst according to one embodiment of the invention, wherein the complex was supported by a carbon black (/C) substrate: 3A: obtained after pyrolysis, 3B-3C: after accelerated stress tests.
Figure 4 illustrates the HOR activity of the carbon-coated Pd-Ni/C catalyst initially and during accelerated stress tests.
Figures 5A and 5B are TEM images of the carbon-coated Pd-Ni/C catalyst initial and after 21 accelerated stress tests, respectively.
Figures 6A and 6B are IL-TEM images of the carbon-coated Pd-Ni/C catalyst according to another embodiment of the invention: 6A obtained after pyrolysis and 6B after electro-oxidation.
Figure 6C is a TEM image of the carbon-coated Pd-Ni/C catalyst after pyrolysis performed at 700°C, 30 min hold under an Ar atmosphere.
Figures 6D and 6E are TEM images of the carbon-coated Pd-Ni/C catalyst after pyrolysis performed at 700 °C,30 min hold under an Ar atmosphere.
Figures 7A and 7B are cyclic voltammetry curves of carbon-coated Pd-Ni/C catalyst according to one embodiment of the invention, wherein 7A shows the surface of carbon-coated Pd-Ni as AST-activation steps are applied, 7B shows the CO poisoning initially, and as AST-activation steps are applied.
Figures 7C and 7D are cyclic voltammetry curves of commercial Pd-Ni catalyst without a carbon matrix, 7C shows the surface of Pd-Ni commercial catalyst as AST-activation steps are applied, 7D shows the CO poisoning initially, and as AST-activation steps are applied on the Pd-Ni commercial catalyst.
Figure 8 are cyclic voltammetry curves of HOR performance before and after a poisoning experiment for commercial Pd-Ni catalyst without a carbon matrix and carbon-coated Pd-Ni/C catalyst according to one embodiment of the invention.
Figures 9A and 9B are cyclic voltammetry curves post accelerated stress test for 9A: carbon-coated Pd-Ni/C catalyst according to one embodiment of the invention, and 9B: commercial Pd-Ni catalyst without a carbon matrix.
Figure 10 is an X-ray Diffraction diagram of carbon-coated Pd-Ni/C catalyst according to one embodiment of the invention.
Figures 11A and 11B are Ni 2p X-ray Photoelectron Spectroscopy spectra of 11A: commercial Pd-Ni catalyst without a carbon matrix, 11B: carbon-coated Pd-Ni/C catalyst according to one embodiment of the'invention.
Figures 11C and 11D are Pd 3d X-ray Photoelectron Spectroscopy spectra of 11C: commercial Pd-Ni catalyst without a carbon matrix, 11D: carbon-coated Pd-Ni/C catalyst according to one embodiment of the invention.
Figure 12 is an X-ray Diffraction diagram of different carbon-coated Pd-Ni/C catalysts with different Pd:Ni ratios.
Figures 13A and 13B are cyclic voltammetry curves for carbon-coated Pd-Ni/C catalyst according to one embodiment of the invention, 13A: obtained after pyrolysis, 13B: after accelerated stress tests.
Figures 13C and 13D are cyclic voltammetry curves for carbon-coated Pd-Ni/C catalyst according to one embodiment of the invention, 13C: for a CV zoom-in between 1.0V to 1.5V, 13D: for a CV zoom-in between 0.05V to 0.7V.
Figure 14 is a TEM image of a carbon-coated Pd-Ni/C catalyst obtained after a pyrolysis of a complex comprising a chelating agent.

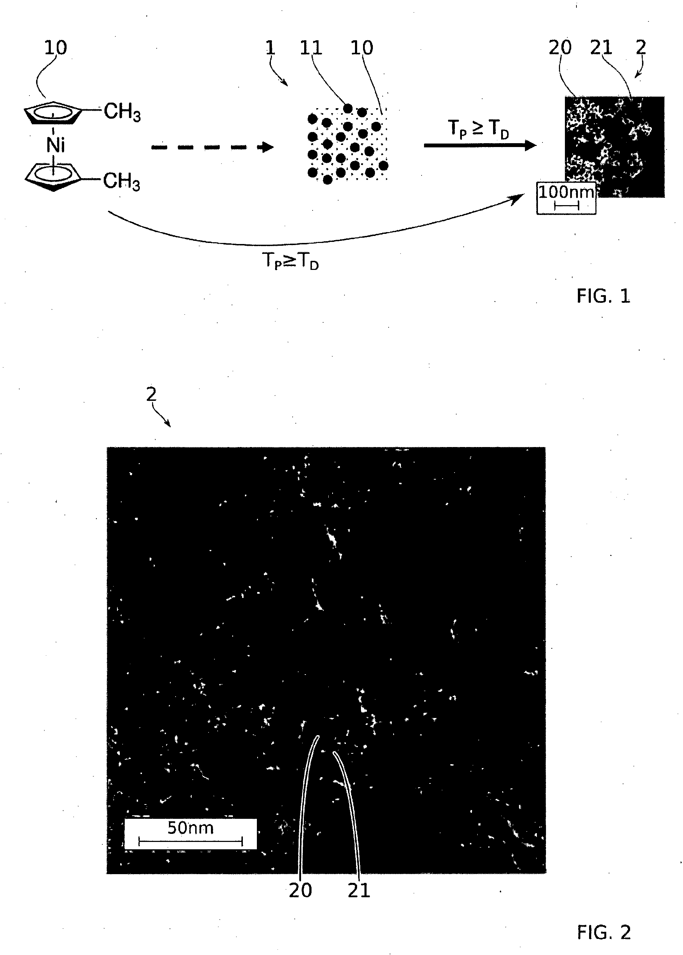

The figures are given as examples and are not restrictive to the invention. They are principle schematic representations intended to facilitate the understanding of the invention and are thus not necessarily at the same scale as the practical applications. More particularly, in figure 1 the relative dimensions between the complex and the substrate are not representative of reality.

### DETAILED DESCRIPTION

Before describing a detailed review of embodiments of the invention, the following are optional features which may be used in combination or alternatively.

According to an example, the non-chelating complexing agent is monodentate.

According to an example, the metal complex does not comprise a chelating agent.

According to an example, the pyrolysis temperature is essentially lesser than or equal to 550°C. The temperature of the pyrolysis is therefore inferior to the temperature used with the chelating agent. The cost of the synthesis can be reduced. The size of the nanoparticles and the thickness of the carbon matrix are reduced as compared to higher temperature.

According to one example, the pyrolysis temperature is essentially greater than or equal to 150°C, preferably essentially greater than or equal to 200°C.

According to one example, the decomposition temperature of the complex is essentially lesser than 200°C. For example, the decomposition temperature of the complex is essentially lesser than or equal to 150°C. The decomposition temperature of the complex is therefore lower than the decomposition of a complex comprising a chelating agent, which is generally above 200°C.

The pyrolysis temperature can be chosen relatively to the decomposition temperature in order to provide a sufficient amount of energy for the catalyst formation. According to an example, the pyrolysis temperature is essentially comprised between decomposition temperature + 50°C and decomposition temperature + 100°C.

Preferably the pyrolysis temperature is essentially ≤ 450°C. During the development of the invention, it was found that this temperature offers a better compromise between providing a sufficient amount of energy for the catalyst formation and the properties of the obtained catalyst.

According to one example, the metal ion is an ion of a transition metal.

According to an example, the metal ion is an ion of a 3d transition metal or a platinum-group metal; preferably the metal is selected from the group consisting of:
- the metal ion being an ion of a 3d transition metal: scandium, titanium, vanadium, chromium, manganese, iron, cobalt, nickel, copper, zinc, and preferably nickel, cobalt and iron.
- the metal ion being an ion of a platinum-group metal: ruthenium, rhodium, palladium, osmium, iridium, platinum, rhenium.

The catalyst is therefore particularly suited to hydrogen evolution reaction.

According to an example, several metal complexes formed with different metal ions are provided. Thus, multi-metallic catalysts are obtained.

According to an example, part of the metal complexes comprises a metal ion of a 3d transition metal, and part of the metal complexes comprises a metal ion of a platinum-group metal. The catalysts obtained are thus 3d-metal/Pt-group-metal multi-metallic catalyst, particularly effective for the catalysis of hydrogen evolution reaction.

According to an example, the at least one metal complex is not supported by a substrate during the pyrolysis of the complex.

According to an alternative example, the at least one metal complex is supported by a substrate during the pyrolysis of the complex.

According to an example, the substrate comprises a metal. Multi-metallic catalysts are thus obtained after the pyrolysis.

According to an example, the substrate is electrically conductive, preferably the substrate is chosen from the group consisting of:
- carbon black and carbon acetylene,
- carbon nanorod, graphene sheets, carbon nanotube (single-walled or multiwalled),
- vitreous carbon,
- nanoparticles comprising at least one metal and black carbon, such as monometallic Pd/C, Ni/C, Pt/C or bimetallic Pd-Ni/C, Pt-Ni/C. (to make alloys using only one or many mixtures of metal complexes),
- a metal or metallic particles, such as Raney nickel, metal foil,
- an electrically conductive metal oxide or electrically conductive metal oxide particles, such as indium tin oxide, and antimony tin oxide, titanium dioxide,
- and mixtures thereof.

The obtained catalyst is thus supported by an electrically conductive substrate, and therefore is particularly suited for electrochemical catalysis.

According to an example, the substrate is electrically insulating, preferably the substrate is chosen from the group consisting of quartz, cellulose, nitrocellulose film, poly(imide), poly(ethylene naphthalate) and poly(ethylene terephthalate), poly(pyrrole), insulating metal oxides, for example CeO₂, TiO₂, Al₂O₃,and their derivatives. An electrically insulating substrate is particularly adaptated for applications such as photocatalytical activity towards water oxidation (Oxygen Evolution Reaction). Insulating metal oxides are more thermally stable compared to polymers.

According to an example, the substrate is a gas phase catalysis substrate, preferably the substrate is chosen from the group consisting of Ni/Al₂O₃, Pt/Al₂O₃, Pd-Ru/Al₂O₃, Co/SiO₂, Ru/TiO₂, Pt-Rh Gauze.

According to an example, the substrate presents a surface area greater than or equal to 50 m²/g, preferably ≥ 100 m²/g, and more preferably ≥250 m²/g. A high surface area favors an intimate dispersion of the metal complex on the substrate. The nanoparticles size is further reduced.

According to one example, the substrate presents a surface area lesser than or equal to 1000 m2/g, preferably strictly lesser than 1000 m²/g, preferably lesser than or equal to 900 m²/g. The catalytic performances of the resulting catalyst are improved in these ranges of surface area. A surface area higher than 1000 m²/g corresponds indeed to a microporous substrate that does not favor mass transport.

According to an example, the pyrolysis step presents a duration comprised between 30 minutes and 3 hours, preferably strictly lesser than 1h. The pyrolysis duration is therefore sufficiently long to form the nanoparticles. The nanoparticle size and/or the thickness of the carbon matrix can furthermore be limited, especially compared to existing solutions with a complex comprising a chelating agent.

According to an example, the method comprises, after the pyrolysis, an oxidative post-treatment to increase the amount of metal oxide in the nanoparticles. The properties of the catalyst can be further tuned.

According to an example, the pyrolysis is performed under inert (or equivalently neutral) atmosphere, for example with an atmosphere comprising argon.

According to an example, the pyrolysis is performed under reducing atmosphere, for example with an atmosphere comprising H₂. This limits, and preferably prevents, the formation of oxide in the nanoparticles.

The at least one metal complex is provided in a solid non dissolved form and the solid non dissolved form is pyrolysed to obtain the catalyst. This simplifies the method by allowing a one-step synthesis of the catalysis without a dissolution and filtration or drying of the catalysts. According to an example, the method does not include dissolving the at least one metal complex in a solvent. Alternatively before the pyrolysis the at least one metal complex is dissolved in a solvent

According to an example, the pyrolysis comprises exposing the at least one metal complex to a temperature greater than or equal to a decomposition temperature of the complex, and maintaining said temperature for a period of sufficient duration to induce a formation of nanoparticles and a carbon matrix surrounding the nanoparticles to form the catalyst.

According to an example, the method comprises recovering the nanoparticles surrounded by a carbon matrix after the pyrolysis or after the oxidative post-treatment for their use as a catalyst.

According to an example, the nanoparticles present at least one dimension lesser than or equals to 10 nm, this size being taken without including the carbon matrix.

According to an example, the carbon matrix surrounding the nanoparticles presents a thickness lesser than or equal to 3 nm. The thicknesses are controlled by temperature, time, pyrolysis atmosphere and complex nature.

According to an example, the carbon matrix surrounding the nanoparticles is at least partially amorphous.

According to an example, the carbon matrix surrounding the nanoparticles is at least partially graphitic.

The term "step" does not necessarily mean that the actions taken during a step are simultaneous or immediately successive, unless stated otherwise. In particular, some actions of a first step may be followed by actions related to a different step, and other actions of the first step may be repeated afterwards. Thus, the term step does not necessarily mean unitary and inseparable actions in time and in the sequence of the method phases.

A parameter "substantially equal to/lesser than/greater than" a given value is defined as being equal to/lesser than/greater than the given value within plus or minus 10% of that value. A parameter "substantially between" two given values means that the parameter is at least equal to the smaller given value within plus or minus 10% of that value and at most equal to the larger given value within plus or minus 10% of that value.

The term "nanoparticles" refers to a nanomaterial formed of objects with at least one dimension between 1 and 1000 nanometers (nm, 10⁻⁹ m), preferably between 1 nm and 100 nm, more preferably between 1 and 50 nm. Preferably the nanoparticles present at least one dimension between 1 nm and 20 nm. Nanoparticles typically have a diameter between 1 and 100 nm. The nanomaterial is typically composed of at least 50% by number of objects with at least one of the dimensions in the indicated ranges.

A material "based on" a species A means a material comprising that species A only or that species A and possibly other species.

A complexing agent is a chemical species capable of binding with metal ions through its single or multiple binding sites. These sites have lone pairs of electrons which can be donated to the d orbitals of a metal ion, forming coordination bonds. This results in a coordination compound, also known as complex. Complexing agent may surround a metal ion or can act as a bridge between two metal ions. A complexing agent can be an ion, molecule or a functional group of a molecule. A complexing agent can have either one binding site or several binding sites. A complexing agent can also be called a ligand.

Attachment of the ligands to the metal atom may be through only one atom, or it may be through several atoms. When only one atom is involved, the ligand is said to be monodentate; when two or more are involved, it said to be multidentate.

A chelating agent is capable of binding to one metal ion with several binding sites in the same molecule, generally the binding sites are atoms P, O, N or S. A chelating agent is a multidentate ligand that binds to a single metal ion through several binding sites present in the molecule. There are no monodentate chelating agents.

The method for the synthesis of the metal catalysts is now described according to several embodiments in reference to figure 1.

The method comprises providing at least one metal complex 10. The metal complex 10 comprises a metal ion and a non-chelating complexing agent comprising carbon, hereafter called complexing agent. The complexing agent is bonded to the metal ion with an interaction force due to the coordination bond between them. This interaction force is typically lower than the interaction force between a chelating agent and a metal ion. The complexing agent can be multidentate or monodentate. For instance, a monodentate non-chelating complexing agent may be attached to a single metal ion through one binding site. A multidentate non-chelating complexing agent may be attached to several metal ions, each through one binding site. This type of complexing agent is generally called bridging ligand.

At least one complexing agent is based on carbon, to provide the carbon element to form the carbon matrix after the pyrolysis of the complex, as detailed further below. More particularly the complexing agent can be a hydrocarbon, which may bear one or several heteroatoms.

According to an embodiment, the complexing agent comprises an aliphatic chain or cycle. For example, the complexing agent is chosen among: 2-methoxyethyl ether, cyclooctadiene.

According to another embodiment, the complexing agent comprises an aromatic group. For example, the complexing agent is chosen among: cyclopentadienyl, and derivatives thereof, for example methylcyclopentadienyl and ethylcyclopentadienyl.

Different complexing agent can complex the metal ion. The complex 10 may comprise at least one complexing agent based on carbon, and other complexing agent not necessarily based on carbon, to complete the coordination sphere. Preferably, all the complexing agents in the complex 10 are based on carbon.

According to one embodiment, the metal ion is an ion of a transition metal. Preferably, the metal ion is an ion of a 3d transition metal or a platinum-group metal. The 3d transition metal can more particularly be chosen among scandium, titanium, vanadium, chromium, manganese, iron, cobalt, nickel, copper, zinc, and preferably nickel, cobalt and iron. Nickel cobalt and iron are preferred to obtain catalyst with earth sustainable materials instead of scarce noble metals. Platinum-group metal can more particularly be chosen among ruthenium, rhodium, palladium, osmium, iridium, platinum and rhenium.

The complex 10 can for example be chosen among : Nickel(II) bromide 2-methoxyethyl ether, Bis(ethylcyclopentadienyl)cobalt(II), bis(pentamethylcyclopentadienyl)cobalt(II), Bis(methylcyclopentadienyl)nickel(II), (Rp)-1-[(1S)-(1-Aminoethyl)]-2-(diphenylphosphino)ferrocene, (S)-(-)-N,N-Dimethyl-1-ferrocenylethylaminen, (Dimethylaminomethyl)ferrocene, Aminoferrocene, Ferrocenemethanol, α-Methylferrocenemethanol, (Dimethylaminomethyl)ferrocene, 1,1'-Ferrocenedimethanol, Ferrocenecarboxylic acid, Ferrocenecarboxaldehyde.

The complex 10 comprising the metal ion and the complexing agent based on carbon can be a commercially available complex 10. Alternatively, the step of providing the metal complex 10 may comprise forming the complex by mixing in solution a commercial metal salt with the complexing agent based on carbon, in order to form the complex 10. Preferably, the complex 10 is provided in a solid non dissolved form and the solid non dissolved form is pyrolysed to obtain the catalyst 10, thus simplifying the method. The solid non dissolved form can be mixed with the substrate 11, and this mixture 1 can be pyrolysed.

As shown in figure 1, the complex 10 can be pyrolysed by heating the complex 10 at a temperature T_{P} greater than or equal to the decomposition temperature T_{D} of the complex 10. The decomposition temperature of the complex is the temperature above which the coordination bonds are sufficiently destabilized so that the complexing agent no longer complexes the metal ion. During the pyrolysis, the metal ions are converted to metal oxide and fuse to form nanoparticles 20. The complexing agent decomposes to form a carbon matrix 21 (which can also be called carbon cap) in which the nanoparticles 20 are embedded. The metal oxide is then at least partially reduced to metal. Several nanoparticles can be embedded in one carbon matrix or the nanoparticles covered with the carbon cap can be dispersed and isolated from one another.

The catalysts 2 obtained are thus formed of nanoparticles 20 surrounded by a carbon matrix 21. The metal-based nanoparticles 20 will catalyze chemical reactions, and the carbon matrix 21 protects the nanoparticles 20 and preserves its catalytic properties. More particularly, the carbon matrix 21 protects the nanoparticles 20 from contaminant such as CO, which is released in case of corrosion of the carbon support in hydrogen fuel cells, or other contaminants like NH₃, C₂H₂, H₂S, SO₂ and S and P compounds (e.g. carbonyl sulfide and metal sulfide) in electrochemical and/or gas phase conditions. The carbon matrix 21 also limits a formation of metal hydride by reduction that would impair the catalyst's performance. The carbon matrix 21 also helps protecting transition metals and Pt-group metal from oxidation during catalysis, inducing a passivation of the catalyst 2. The carbon matrix 21 further prevents Ostwald ripening and dissolution of the nanoparticles 20, and therefore limits the loss of active material. The catalytic activity of the catalyst 2 is thus preserved and stabilized during the course of its use.

The pyrolysis temperature can be chosen relatively to the decomposition temperature of the complex 10 in order to provide a sufficient amount of energy for the catalyst 2 formation. According to an example, the pyrolysis temperature is essentially comprised between T_{D}+ 50°C and T_{D} + 100°C, with T_{D} the decomposition temperature of the complex 10. For instance, the pyrolysis temperature can be essentially greater than or equal to 150°C, preferably essentially greater than or equal to 200°C, and/or essentially lesser than or equal to 550 °C. The decomposition temperature of the complex can be essentially lesser than or equal to 200°C, as compared to the decomposition of a complex comprising a chelating agent, which is generally above 200°C. For example, the decomposition temperature of the complex is essentially lesser than or equals to 150°C.

Preferably the pyrolysis temperature is essentially equal to 450°C. During the development of the invention, it was found that this temperature offers a better compromise between providing a sufficient amount of energy for the catalyst formation and the properties of the obtained catalyst, as detailed below.

The size of the nanoparticles 20 can be tuned depending on the nature of the metal, and the pyrolysis conditions, especially the. temperature of pyrolysis and its duration. Preferably, these parameters are chosen so that the diameter of the nanoparticles 20 is lesser than or equal to 20 nm, and preferably 10 nm.

The properties of the carbon matrix 21 can be tuned depending on the complex 10 and the pyrolysis conditions. The thickness of the carbon matrix 21 surrounding the nanoparticle 20 can be tuned from a few carbon monolayers (≤1 nm thickness) to several carbon monolayers (≥5 nm thickness). Preferably the thickness of the carbon matrix 21 surrounding the nanoparticle 20 is between 0,25 to 2 nm.

The carbon matrix can further be modified depending especially on the nature of the metal lattice and the pyrolysis conditions. If the metal is chosen among nickel, cobalt and iron, the carbon matrix 21 can be graphitized by the metal particles. If the metal is a Pt-group metal, the carbon matrix 21 can remain amorphous. The amorphous/graphitic nature of the carbon matrix 21 can also depend on the temperature of the pyrolysis and its duration. The higher the temperature and/or the duration of pyrolysis, the more the carbon matrix 21 can be in a graphitic state.

For example, the pyrolysis step presents a duration comprised between 30 minutes and 3 hours, preferably strictly lesser than 1h.

The properties of the metal nanoparticle 20 can also be tuned depending on the pyrolysis atmosphere. The pyrolysis can be performed in a neutral (or equivalently inert) atmosphere. To this effect, the atmosphere may comprise a noble gas, such as argon. The nanoparticles 20 are thus mainly metallic. For example, at least 90 %, and preferably at least 95 % of the metal species of the nanoparticles 20 are in the metal state.

According to another embodiment, the pyrolysis can be performed in an oxidative atmosphere, for example, an oxygen-based atmosphere. To this effect, the atmosphere may comprise a gas containing the oxygen element, such as dioxygen or ozone. The metal oxide content of the nanoparticle can therefore be increased.

According to another embodiment, the pyrolysis can be performed in a reductive atmosphere, for example, a hydrogen-based atmosphere. To this effect, the atmosphere may comprise dihydrogen. The metallic content of the nanoparticle can therefore be increased.

As shown in figure 1, the metal complex 10 can be pyrolysed without being supported by a substrate. Alternatively, the metal complex 10 can be mixed with a substrate 11, and the resulting mixture 1 can be pyrolysed to form the catalyst 2 embedded with the substrate 11. This can be particularly advantageous for certain applications as detailed below.

According to an embodiment, the substrate 11 is electrically conductive. The catalyst 2 can be embedded in a conductive substrate for applications such as electrochemical reactions. Preferably the substrate 11 is chosen among:
- carbon black and carbon acetylene,
- carbon nanorod, graphene sheets, carbon nanotube (single-walled or multiwalled),
- vitreous carbon,
- nanoparticles comprising at least one metal and black carbon, such as monometallic Pd/C, Ni/C, Pt/C or bimetallic Pd-Ni/C, Pt-Ni/C.
- a metal or metallic particles, such as Raney nickel, metal foil
- an electrically conductive metal oxide or electrically conductive metal oxide particles, such as indium tin oxide, and antimony tin oxide, titanium dioxide, for example an antimony tin oxide conducting glass
- and mixtures thereof.

According to an alternative embodiment, the substrate 11 can be electrically insulating. Preferably the substrate 11 is chosen from the group consisting of quartz, cellulose, nitrocellulose film, poly(imide), poly(ethylene naphthalate) and poly(ethylene terephthalate), poly(pyrrole), insulating metal oxides, for example CeO₂, TiO₂, Al₂O₃, and their derivatives.

The substrate 11 can be a gas phase catalysis substrate, preferably the substrate is chosen from the group consisting of Ni/Al₂O₃, Pt/Al₂O₃, Pd-Ru/Al₂O₃, Co/SiO₂, Ru/TiO₂, Pt-Rh Gauze.

According to a preferred embodiment, the catalyst 2 obtained comprises several metals, for instance the catalyst is bimetallic. Indeed, studies shown that multi-metallic particle catalysts, e.g. bi-functional Pd-MOₓ, Ni-MOₓ or Pd-Ni catalysts, are more active and stable for alkaline HOR than their monometallic counterparts, and sometimes than Ptbased catalysts. To this end, alternatively or in combination, several metal complexes formed with different metal ions can be provided, and/or the complex 10 can be supported by a substrate 11 comprising a metal during the pyrolysis. During the pyrolysis, the metal from the different complexes 10 and/or the metal from the substrate 11 and the complex(es) can fuse to form alloys.

According to an embodiment, part of the metal complexes comprises a metal ion of a 3d transition metal, and part of the metal complexes comprises a metal ion of a platinum-group metal. According to an alternative or complementary embodiment, at least part of the metal complexes comprises a metal ion of a 3d transition metal and the substrate comprises a platinum-group metal. The catalysts obtained are thus 3d-metal/Pt-group-metal multi-metallic catalysts.

According to one embodiment, the substrate presents a high surface area in order to favor an intimate mixing between the metal complex 10 and the substrate 11. The metal complex 10 is thus well dispersed in the substrate 11 which prevents agglomeration of nanoparticles 20 and thus favors a limitation of the nanoparticles size during the pyrolysis. A homogeneous repartition of the nanoparticles 20 in the substrate 11 is furthermore favored. The surface area of the substrate can be greater than or equal to 50 m²/g, preferably ≥ 100 m²/g, and more preferably ≥ 250 m²/g. The substrate 11 can present a surface area lesser than or equal to 1000 m²/g, preferably lesser than or equal to 900 m²/g. For example, a metal-oxide-based substrate can present a surface area ≥ 50 m²/g. Graphitic-carbon-based substrate can present a surface area ≥ 100 m²/g. Amorphous-carbon-based substrate can present a surface area ≥ 250 m²/g.

The catalytic properties of the catalyst 2 can depend on the metal M/metal oxide MₓO_{y} nature of the nanoparticle 20. The M:MₓO_{y} ratio can be chosen to increase the catalytic activity of the catalyst 2. For example, the M:MₓO_{y} ratio can essentially be comprised between 1:2 and 1:10 . To this effect, as specified before, the atmosphere during the pyrolysis step can be adapted. Alternatively, or complementarily, the method can further comprise, after the pyrolysis, a treatment of the catalyst 2 configured so as to modify the M:MₓO_{y} ratio. This treatment can also be called activation of the catalyst 2. This treatment can be an electro-oxidation of the catalyst 2 in order to increase to metal oxide content of the nanoparticle 20. For instance, catalyst 2 can be activated by prolonged potential cycling, e.g. between 0.1 to 1.23 V vs. RHE. According to another example, catalyst 2 can be activated by applied a fixed polarization (e.g. at 1.23 V vs. RHE).

### SPECIFIC EXAMPLES

Specific examples are now detailed.

Carbon-coated Ni catalyst 2 and carbon-coated Ni-Pd catalyst 2 were prepared with a nickel (II) complexe : Bis(cyclopentadienyl)nickel(II), and either no substrate, a commercial black-carbon particles substrate (VULCAN^{®} XC-72) or a commercial Pd-black carbon particles substrate (Pd-VULCAN^{®} XC-72), with a Pd content of 10 % by weight of the dry weight of the substrate. Ni/C catalyst and Ni-Pd/C catalyst denote nanoparticles surrounded by the carbon matrix obtained with black-carbon particles substrate .

The catalyst 2 was prepared as follow:
- Ball-milling the Ni complex, with when applicable the substrate,
- Pyrolysis in Ar-atmosphere at 450 °C (unless specified otherwise), during 30 minutes .

The obtained catalyst was compared with commercial catalyst 20% Pd-10% Ni non-capped/VULCAN^{®} XC72, commercialized by the society Premetek, with 160 µg_{Pd}/cm² or 20 µg_{Pd}/cm² depending on the amount of catalyst used.

The carbon-coated Pd-Ni catalyst was tested for HOR reactions. It was demonstrated that the catalyst can:
- resist passivation in strong alkali solution,
- resist poisoning (e.g. from CO species) while still presenting HOR activity,
- slow down the particle agglomeration,
- slow down the metallic leaching.

The material was tested at 0.1 M KOH, 25 °C, in a context of accelerated stress tests (AST) that mimic the start and stop of the alkaline fuel cell (AFC) by performing cyclic voltammetry (CV) between 0.1 V and 1.23 V, at 100 mV s⁻¹ under Ar.

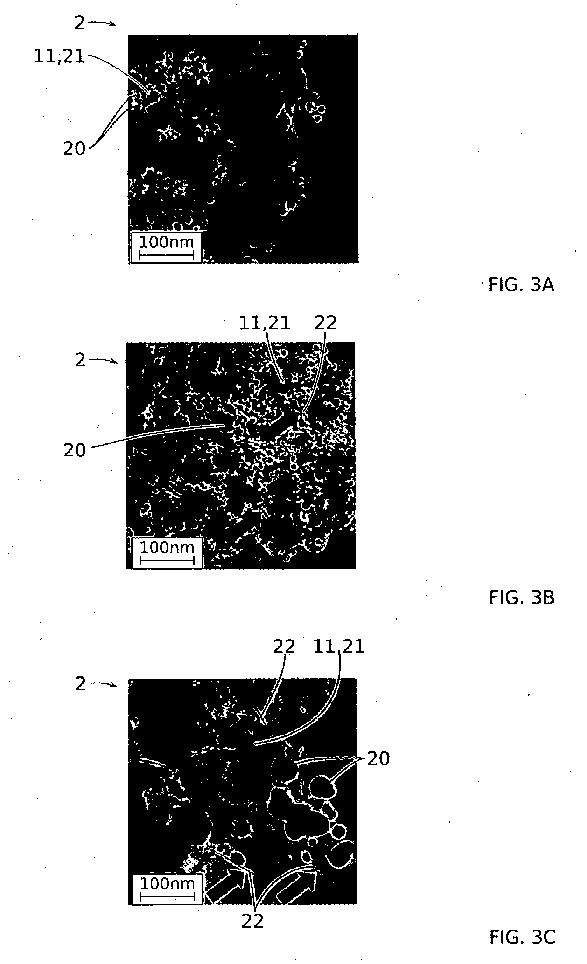

Figure 2 shows a carbon-coated Ni catalyst synthesized without a supporting substrate. Figure 3A shows a carbon-coated Ni-Pd/C catalyst synthesized with the supporting substrate Pd-VULCAN^{®} XC-72. With the supporting substrate, a more homogeneous distribution in the carbon matrix and a lower polydispersity of nanoparticles can be observed.

Figure 3A shows the carbon-coated Ni-Pd/C catalyst obtained after pyrolysis. Figure 3B shows the same catalyst after exposing the catalyst to 600 voltammetry cycles between 0.1 V and 1.23 V, at 100 mV/s under Ar, without performing a HOR. A growth of Ni oxides needles 22 (pointed by arrows), and a minor agglomeration of the particles can be observed. The carbon cap 21 remains pristine. Figure 3C shows the same catalyst after exposing the catalyst to 3150 CV between 0.1 V and 1.23 V, at 100 mV/s under Ar, and after performing several HOR. More Ni needles and an agglomeration of particles can be observed. The catalyst still presents HOR catalysis activity. The catalyst 2 is very durable and still presents HOR catalyst activity even after 3150 AST in harsh condition.

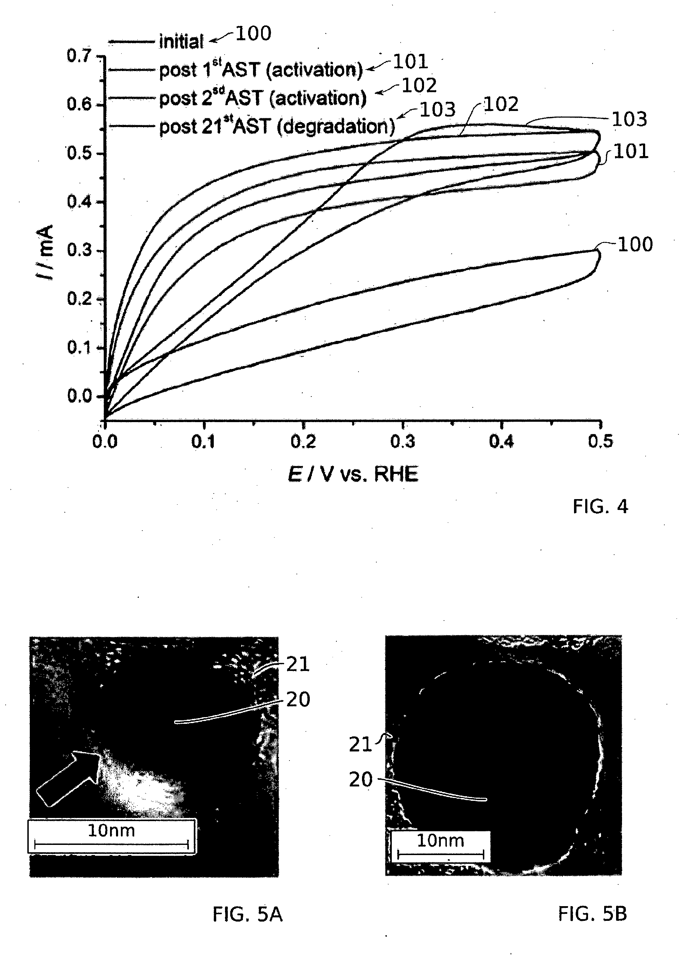

Figure 4 show the HOR activity the carbon-coated Ni-Pd/C catalyst obtained:
- 100: after pyrolysis (initial), as illustrated in figure 5A,
- at different activation states:
   ∘ 101: after 1^{st} AST (150 CV),
   ∘ 102: after 2^{nd} AST (further 150 CV),
   ∘ 103: after 21^{st} AST (for a total of 3150 CV), illustrated in figure 5B.

Figure 4 shows a high durability of the catalyst due to the carbon matrix 21. The catalyst still present HOR activity after 3150 AST in harsh condition, but lower than in the initial state.

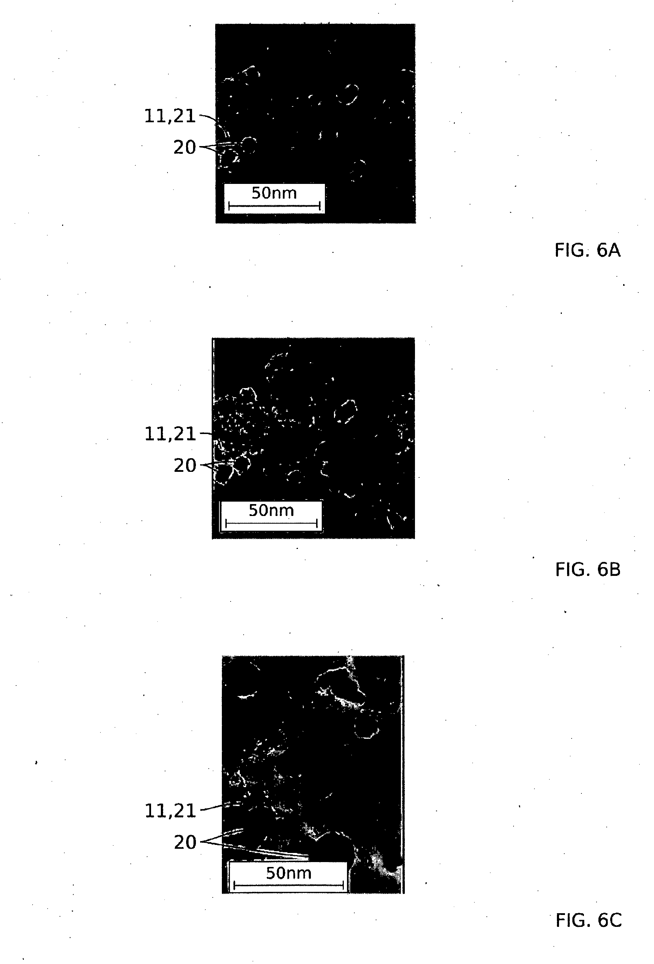

Figure 6A and 6B show the carbon-coated Ni-Pd/C catalyst, 6A: obtained after pyrolysis, and 6B: after activation with 550 CV between 0.1V and 1.23V, at 100 mV.s⁻¹ under Ar. These TEM views were acquired with IL-TEM, allowing imaging the same portion of the catalyst. Non-capped catalyst would be agglomerate after this activation, but the carbon-capped catalyst 2 shows no agglomeration thanks to the carbon matrix 21. Oxide growth with this activation moreover facilitates the HOR catalysis.

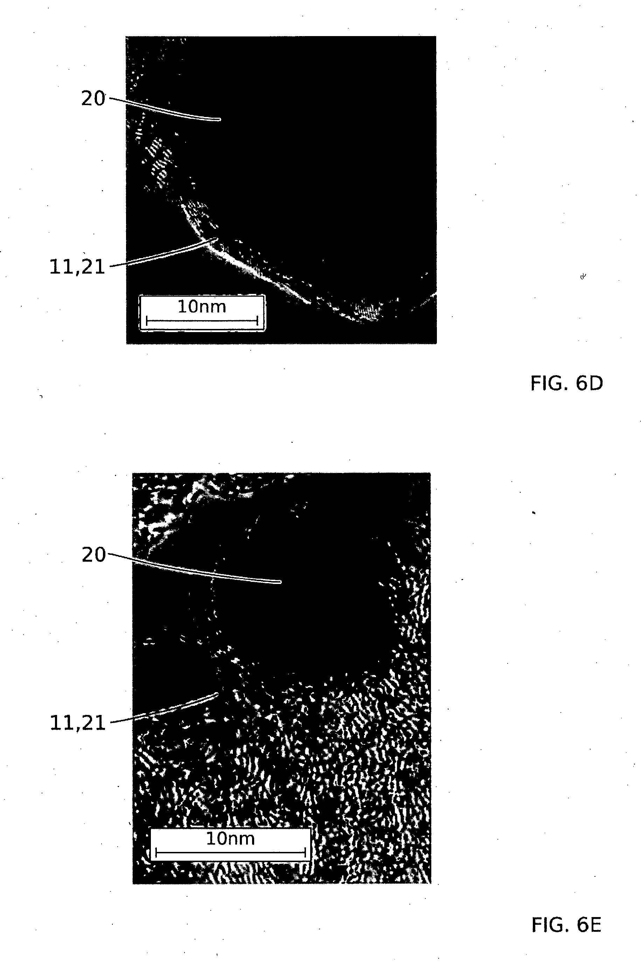

Figure 6C shows the carbon-coated Ni-Pd/C catalyst obtained after the pyrolysis performed at 700 °C, for comparison with the temperature of 450 °C. The nanoparticles 20 present a bigger size. Different textures of carbon caps 21 were furthermore observed surrounding the nanoparticles 20, as for exampled shown in figures 6D and 6E.

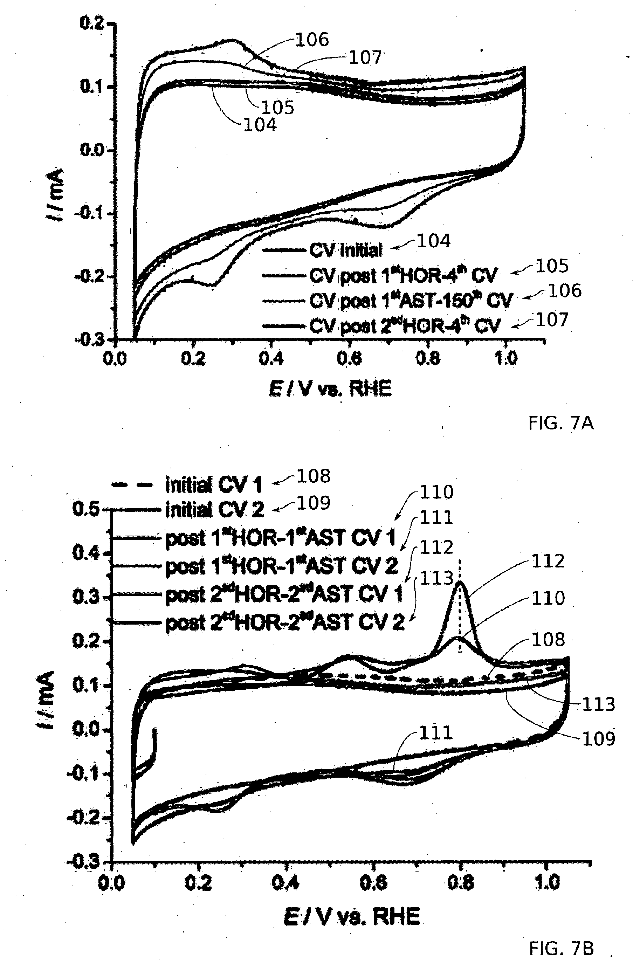

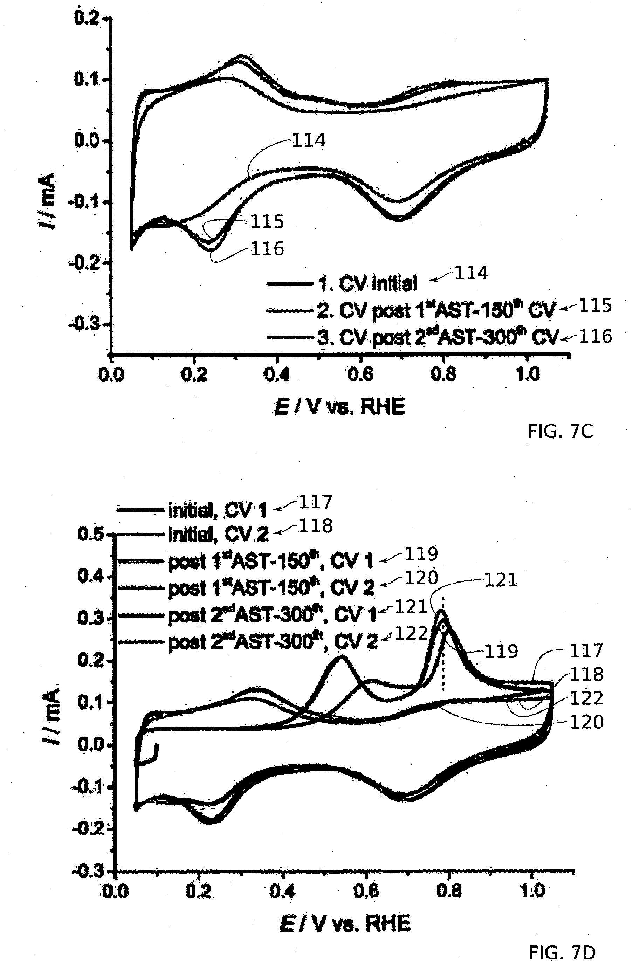

Figure 7A to 7D show a comparison in terms of catalytic activity and CO poisoning between the carbon-coated Ni-Pd/C catalyst (Fig. 7A-7B) and the commercial Ni-Pd catalyst (Fig. 7C-7D), with:
- 104: after pyrolysis (initial),
- 105: 4^{th} CV after a 1^{st} HOR,
- 106: 150^{th} CV after a 1^{st}AST,
- 107: 4^{th} CV after a 2^{nd} HOR,
- 108: after pyrolysis (initial CV1),
- 109: after pyrolysis (initial CV2),
- 110: after a 1^{st} HOR and 1^{st} AST CV1,
- 111: after a 1^{st} HOR and 1^{st} AST CV2,
- 112: after a 2^{nd} HOR and 2^{nd} AST CV1,
- 113: after a 2^{nd} HOR and 2^{nd} AST CV2,
- 114: after pyrolysis (initial),
- 115: 150^{th} CV after a 1^{st} AST,
- 116: 300^{th} CV after a 2^{nd} AST,
- 117: after pyrolysis (initial CV1),
- 118: after pyrolysis (initial CV2),
- 119: after a 1^{st} AST (150 CV) CV1,
- 120: after a 1^{st} AST (150 CV) CV2,
- 121: after a 2^{nd} AST (300 CV) CV1,
- 122: after a 2^{nd} AST (300 CV) CV2.

Both catalysts present roughly the same amount of Pd: 160 µg_{Pd}/cm². Figure 7A shows surface of Pd-Ni with a carbon matrix as AST-activation steps are applied. The electrochemically-active Pd surface is gradually increasing (increasing hydrogen underpotential deposition area (H-upd)). Comparatively, figure 7C shows that the surface of Pd-Ni commercial catalyst need small activation but then was deactivated quickly.

In figures 7B and 7D, CV1 is the first cycle that showed CO stripping off. CV2 is the second cycle that showed the surface has no CO left (because it was stripped off). This allows to calculate how much CO adsorbed on Pd surface. Figure 7B shows that Pd surface does not adsorb CO poisoning species initially. As AST-activation steps are applied, Pd surface starts to adsorb some amount of CO, but not all, i.e. some surface is still protected. Comparatively, figure 7D shows that Pd surface of Pd-Ni commercial catalyst completely adsorbs CO poisoning species initially; the unprotected catalyst is poisoned easily. Figure 7B shows a reduction of the ≈0.8 V peak as compared to figure 7D. This shows a blockage of CO by the carbon matrix.

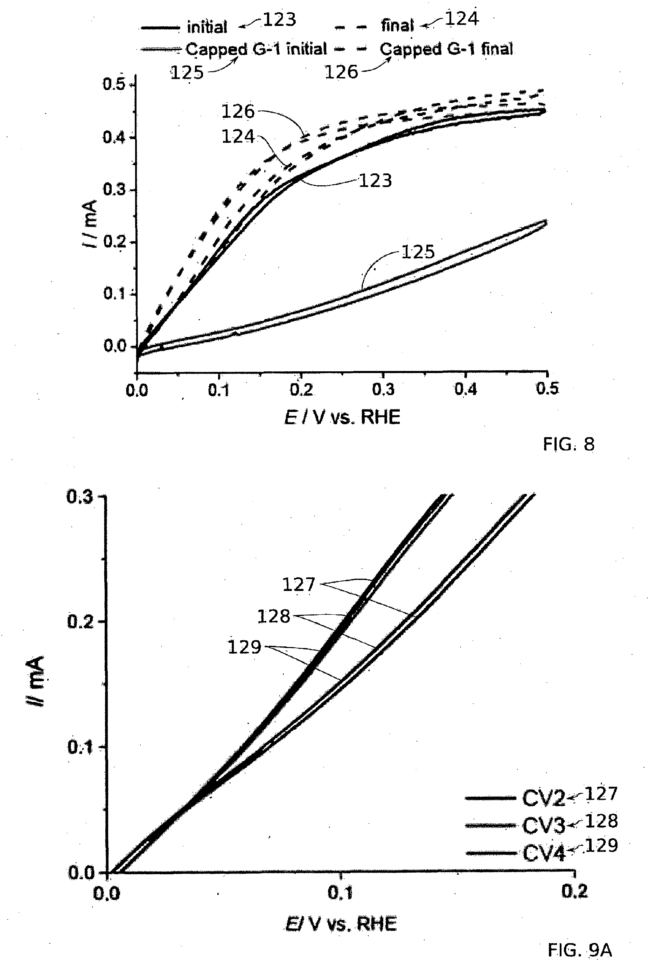

Figure 8 shows the poisoning effect and reactivation between the commercial Ni-Pd catalyst (123: during HOR initial, 124: during HOR final, as detailed below) and carbon-coated Ni-Pd/C catalyst (125: during HOR initial, 126: during HOR final, as detailed below). Both catalysts comprise roughly the same amount of Pd: 20 µg_{Pd}/cm². The procedure performed is as follow:
- HOR initial,
- Poisoning in H2-AST (0 to 0.5 V for 5000 CV),
- Reactivation (using 0.1 V to 1.23 V CV),
- final HOR.

Curves were acquired between 0 V to 0.5 V in 0.1 M KOH, at 25 °C, at 5 mV s⁻¹. Figure 8 shows that carbon-coated Ni-Pd/C catalyst is less prone to poisoning than the non-capped commercial catalyst. Furthermore, carbon-coated Ni-Pd/C catalyst presents a higher HOR performance post reactivation than the non-capped commercial catalyst.

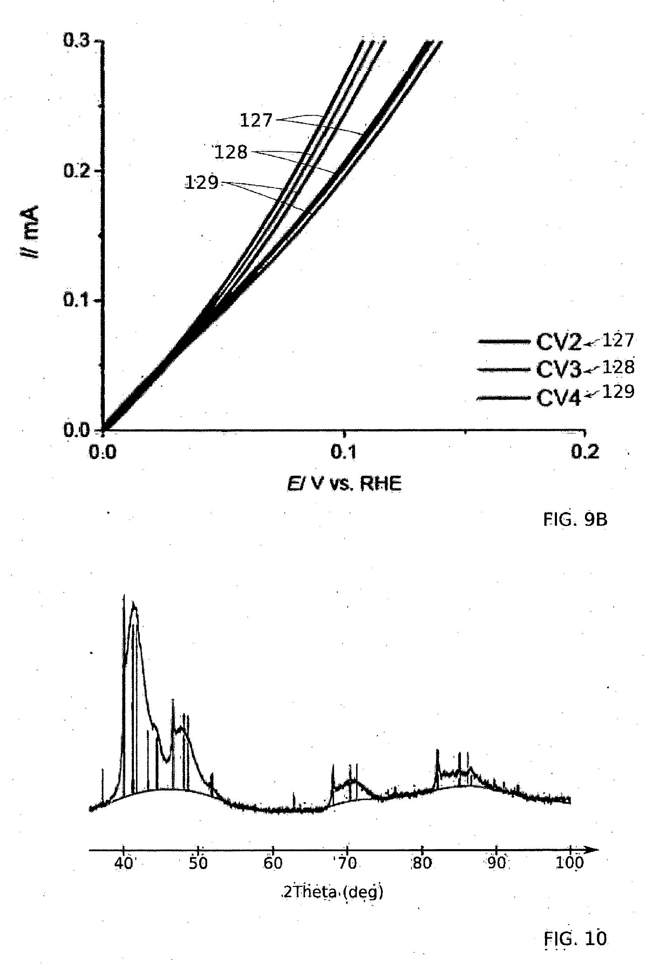

Figure 9A and 9B show a stability comparison between the carbon-coated Ni-Pd/C catalyst (Fig. 9A) and the commercial Ni-Pd catalyst (Fig. 9B), after 900 CV 0.1V-1.23V under Ar. Both catalysts comprise roughly the same amount of Pd: 20 µg_{Pd}/cm². The carbon-coated Ni-Pd/C catalyst has stable HOR performances, indeed the three CV curves 127, 128,129 measured successively are almost superimposed in figure 9A. The commercial Ni-Pd catalyst is unstable and degraded fast after only 900 AST cycles, in accordance with the result discussed above.

Figure 10 shows a XRD diagram of the carbon-coated Ni-Pd/C catalyst after pyrolysis. No significant peak for NiO or PdO is observed. The catalyst comprises thus only metallic phases of Ni/Pd and their alloys, which is mostly due to the carbon matrix that prevents the metal oxidation.

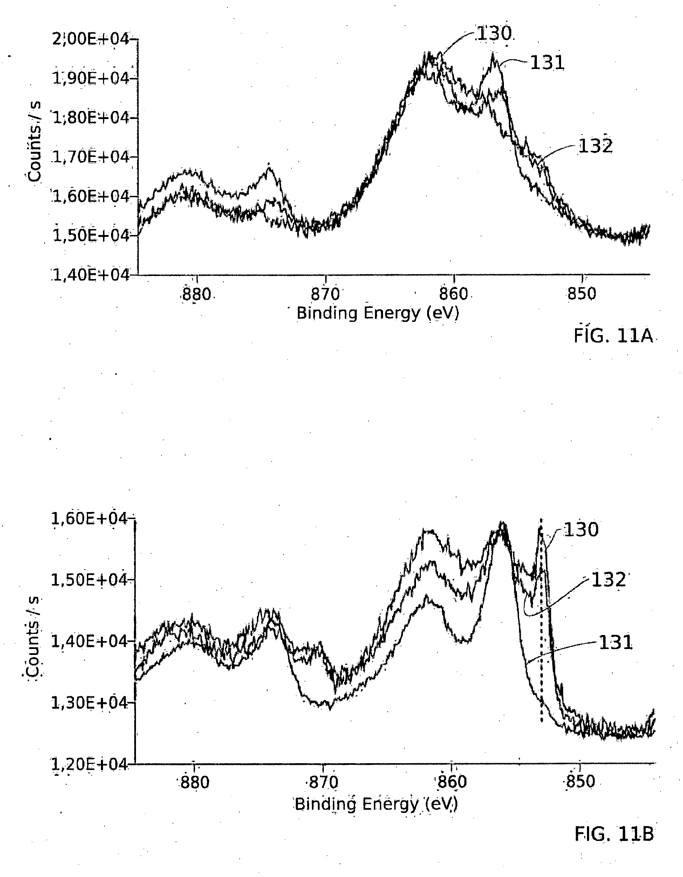

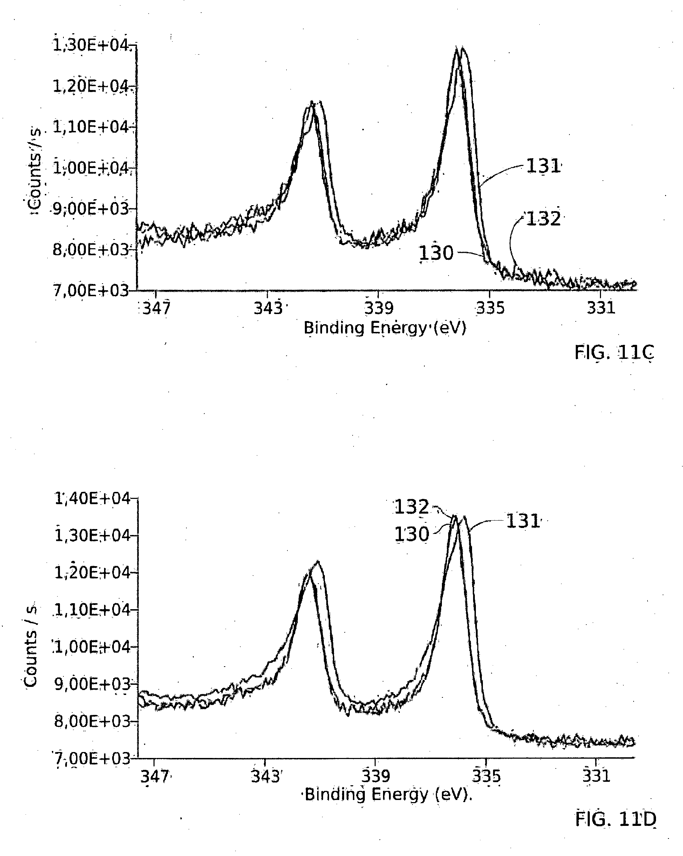

Figures 11A to 11D illustrate examples of metal/metal oxide optimization between the carbon-coated Ni-Pd/C catalyst (Fig. 11B and 11D) and the commercial Ni-Pd catalyst (Fig. 11A and 11C). Figures 11A and 11B show Ni 2p spectra, and figures 11C and 11D show Pd 3d spectra. The metal/metal oxide contents are summarized in the table below.The cycle conditions are as follow:
- Initial 130 : no cycle
- Ar-600 cycles 131: from 0.1 to 1.23 V (3s for each potential) under Ar atmosphere,
- H2-1000 cycles 132: from 0.1 to 1.23 V (3s for each potential) under H2 atmosphere.

| Catalyst | Cycling condition | Ni / at.% | Ni-oxidized / at.% |
|---|---|---|---|
| carbon-coated Ni-Pd/C catalyst | Initial (130) | 31 % | 69 % |
| | Ar-600 cycles (131) | 7% | 93 % |
| | H₂-1000 cycles (132) | 31 % | 69 % |
| commercial Ni-Pd catalyst | Initial (130) | 23 % | 77% |
| | Ar-600 cycles (131) | 8% | 92 % |
| | H₂-1000 cycles (132) | 19 % | 81 % |
| Catalyst | Cycling condition | Pd / at.% | Pd-oxidized / at.% |
| carbon-coated Ni-Pd/C catalyst | Initial (130) | 96% | 4% |
| | Ar-600 cycles (131) | 83 % | 17 % |
| | H₂-1000 cycles (132) | 94 % | 6% |
| commercial Ni-Pd catalyst | Initial (130) | 79 % | 21 % |
| | Ar-600 cycles (131) | 84 % | 16 % |
| | H₂-1000 cycles (132) | 78% | 22 % |

Referring to figure 11A and 11B, after pyrolysis (initial 130) a higher Ni metallic content (depicted by the dotted line in figure 11B) is observed due to the carbon matrix layers produced by pyrolysed Bis(cyclopentadienyl)nickel(II) complexin the synthesis of the carbon-coated Ni-Pd/C catalyst. After 1000 cycles under H₂ 132, the carbon-coated Ni-Pd/C catalyst keeps a constant Ni composition under operation, whereas Ni oxidation takes place in the uncapped commercial catalyst.

Referring to figure 11C and 11D, after pyrolysis (initial 130), a higher Pd metallic content is observed due to the structure of the nanoparticles: Ni surrounds Pd nanoparticles and acts as a protection layer. After 1000 cycles under H₂ 132, the carbon-coated Ni-Pd/C catalyst keeps the highest Pd metallic composition under operation, whereas the lowest Pd metallic can be found in the uncapped commercial catalyst. Further, opposite trends between capped vs. uncapped catalysts indicate protection facing the Pd-leaching for the carbon-capped catalyst under Ar.

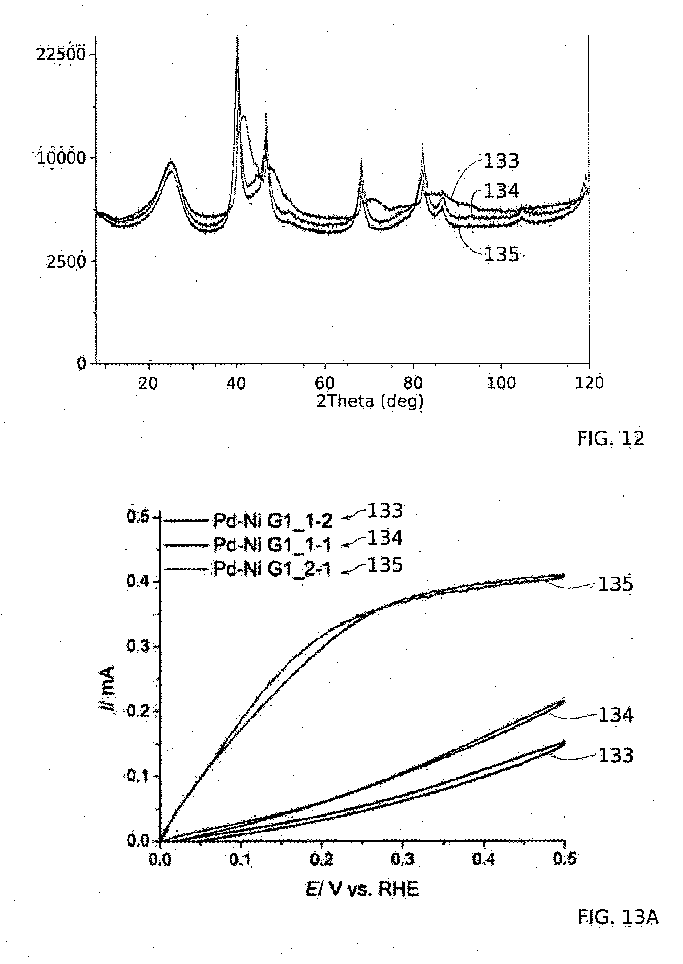

Figures 12 to 13D illustrate examples of variation of the Ni amount in the carbon-coated Ni-Pd/C catalyst. Different degree of alloys can be synthesized by adding different Pd:Ni metallic ratios, such as 1:2, 1.38:1 and 2:1. Figure 12 shows XRD spectra for different Pd:Ni ratios :
- 133: 1:2,
- 134: 1.38:1,
- 135: 2:1.

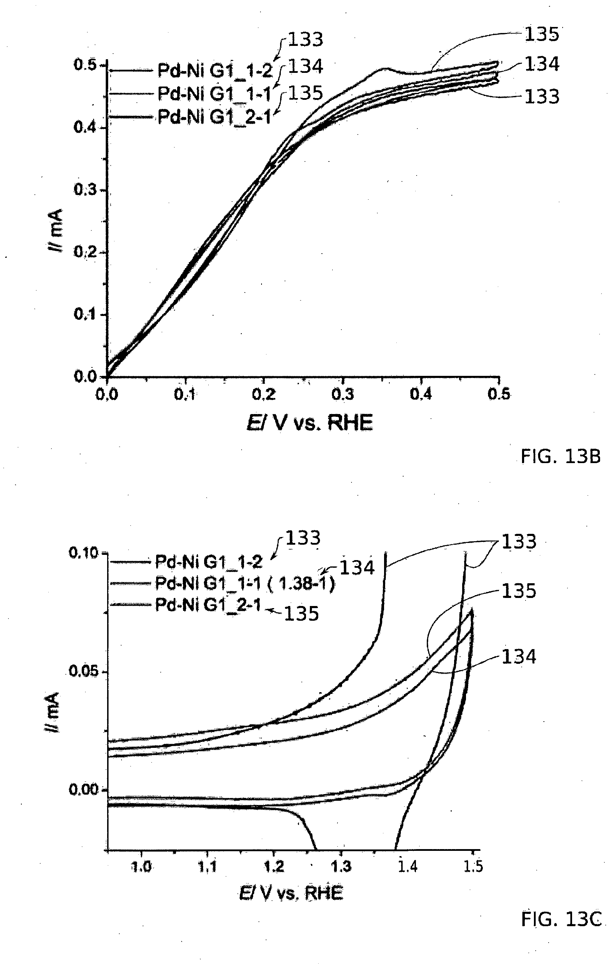

Figures 13A and 13B shows the catalysts having these Pd:Ni ratios 13A: after pyrolysis, 13B: after AST 300 CV. Catalysts with equal or more Ni than Pd (ratio Pd:Ni 1:2 and 1:1) should be activated, due to the Ni which forms a cap around the Pd.

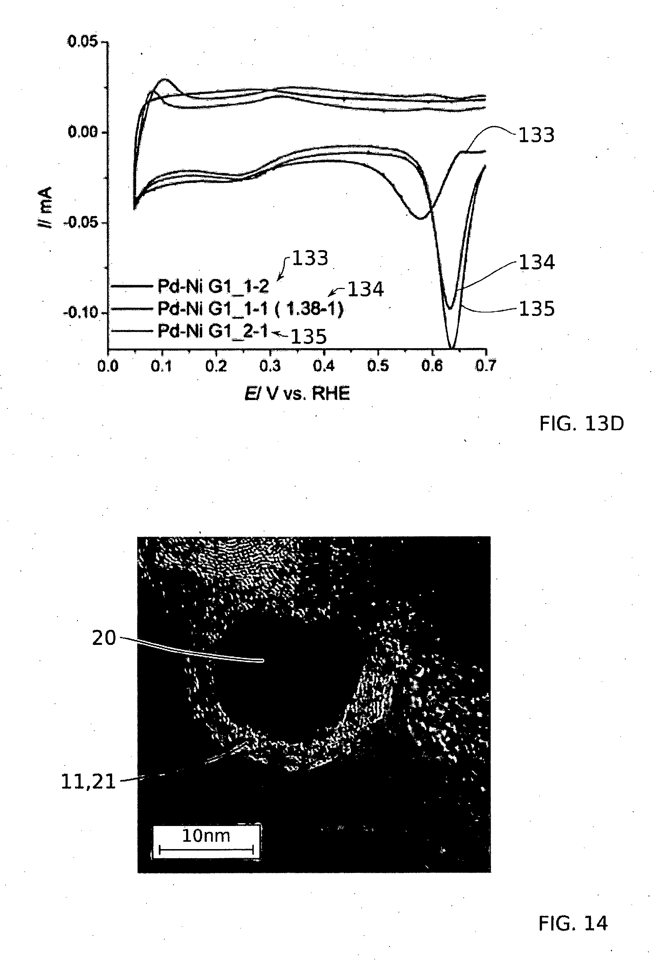

Figures 13C and 13D show the catalysts having these Pd:Ni ratios 13C: for a CV between 1.0 to 1.5V, 13D: for a CV between 0.0 to 0.7V. With an increasing Ni content (ratio Pd:Ni 1:2, as shown in figure 13C where the NiOx reduction peak is bigger than their counterparts), the Pd is more metallic (as shown in figure 13D where the PdOx reduction peak is shifted to the left).

Figure 14 shows a carbon-coated Pd-Ni/C catalysts obtained with the pyrolysis of dichloro[1,2-bis(diethylphosphino)ethane]nickel(II). 1,2-bis(diethylphosphino)ethane is a chelating agent. The melting point of this complex is between 227°C and 264°C, which is about 80°C higher than Bis(cyclopentadienyl)nickel(II) complex (between 171°C and 173°C). At this temperature of 450 °C, the complex comprising a chelating agent leads to a more amorphous carbon matrix as compared to the complex comprising a non-chelating agent that can form more well-ordered carbon matrix.

The present invention is not limited to the above described examples. Many other embodiments are possible, for example by combination of previously described features, without going beyond the scope of the invention. Furthermore, the features described in relation to one aspect of the invention may be combined with another aspect of the invention.

## Claims

1. A method for a synthesis of a metal catalyst (2), comprising:
- providing at least one metal complex (10) comprising a metal ion and a non-chelating complexing agent comprising carbon, the complex (10) having a decomposition temperature,
- pyrolysis of the complex (10) at a temperature greater than or equal to the decomposition temperature of the complex (10), whereby inducing a formation of nanoparticles (20) surrounded by a carbon matrix (21) to form the catalyst (2).

2. The method according to the preceding claim wherein the non-chelating complexing agent is monodentate.

3. The method according to any one of the preceding claims, wherein the pyrolysis temperature is lesser than or equal to 550 °C.

4. The method according to any one of the preceding claims, wherein several metal complexes (10) formed with different metal ions are provided.

5. The method according to the preceding claim, wherein part of the metal complexes (10) comprises a metal ion of a 3d transition metal, and part of the metal complexes (10) comprises a metal ion of a platinum-group metal.

6. The method according to any one of the preceding claims, wherein the at least one metal complex (10) is supported by a substrate (11) during the pyrolysis of the complex (10).

7. The method according to the preceding claim, wherein the substrate (11) comprises a metal.

8. The method according to any one of the two preceding claims, wherein the substrate (11) is electrically conductive, preferably the substrate (11) is chosen from the group consisting of:
- carbon black and carbon acetylene,
- carbon nanorod, graphene sheets, carbon nanotube,
- vitreous carbon,
- nanoparticles comprising at least one metal and black carbon, such as monometallic Pd/C, Ni/C, Pt/C or bimetallic Pd-Ni/C, Pt-Ni/C,
- a metal or metallic particles, such as Raney nickel, metal foil,
- an electrically conductive metal oxide or electrically conductive metal oxide particles, such as indium tin oxide, and antimony tin oxide, titanium dioxide,
- and mixtures thereof.

9. The method according to any one of the claims 6 and 7, wherein the substrate (11) is electrically insulating, preferably the substrate (11) is chosen from the group consisting of quartz, cellulose, nitrocellulose film, poly(imide), poly(ethylene naphthalate) and poly(ethylene terephthalate), poly(pyrrole), insulating metal oxides, and their derivatives.

10. The method according to claim 7, wherein the substrate (11) is a gas phase catalysis substrate (11), preferably the substrate is chosen from the group consisting of Ni/Al₂O₃, Pt/Al₂O₃, Pd-Ru/Al₂O₃, Co/SiO₂, Ru/TiO₂, Pt-Rh Gauze.

11. The method according to any one of the preceding claims, wherein the pyrolysis step present a duration comprised between 30 minutes and 3 hours, preferably strictly lesser than 1h.

12. The method according .to any one of the preceding claims, wherein the method comprises, after the pyrolysis, an oxidative post-treatment to increase the amount of metal oxide in the nanoparticles.

13. The method according to any one of the preceding claims, wherein the at least one metal complex (10) is provided in a solid non dissolved form and the solid non dissolved form is pyrolysed.

14. A metal catalyst (2) synthesized by the method of claim 1.

15. The metal catalyst (2) according to the preceding claim, wherein the nanoparticles (20) present at least one dimension lesser than or equals to 10 nm.
